(19) Europäisches Patentamt
European Patent Office
Office européen des brevets

(11) **EP 2 003 292 B1**

(12) **EUROPÄISCHE PATENTSCHRIFT**

(45) Veröffentlichungstag und Bekanntmachung des Hinweises auf die Patenterteilung:
**18.12.2019 Patentblatt 2019/51**

(51) Int Cl.:
*F01D 5/22* (2006.01)     *F01D 11/08* (2006.01)
*F04D 29/68* (2006.01)

(21) Anmeldenummer: **08010395.5**

(22) Anmeldetag: **06.06.2008**

(54) **Strömungsarbeitsmaschine aufweisend ein Schaufeldeckband mit Überstand**

Fluid working machine having blade shroud with overhang

Machine de travail fluidique avec virole d'aube dotée d'un rebord

(84) Benannte Vertragsstaaten:
**DE FR GB**

(30) Priorität: **14.06.2007 DE 102007027427**

(43) Veröffentlichungstag der Anmeldung:
**17.12.2008 Patentblatt 2008/51**

(73) Patentinhaber: **Rolls-Royce Deutschland Ltd & Co KG**
**15827 Blankenfelde-Mahlow (DE)**

(72) Erfinder: **Gümmer, Volker**
**85411 Hohenkammer (DE)**

(74) Vertreter: **Hoefer & Partner Patentanwälte mbB**
**Pilgersheimer Straße 20**
**81543 München (DE)**

(56) Entgegenhaltungen:
**EP-A1- 0 799 973       EP-A2- 0 475 329**
**EP-A2- 1 087 100       WO-A1-93/16275**
**CH-A- 112 269          GB-A- 1 149 616**
**GB-A- 2 004 599        JP-A- 10 238 307**
**JP-A- 2006 138 259     US-A- 3 065 955**
**US-A- 3 640 638        US-A- 5 488 825**
**US-A1- 2005 106 025**

**Beschreibung**

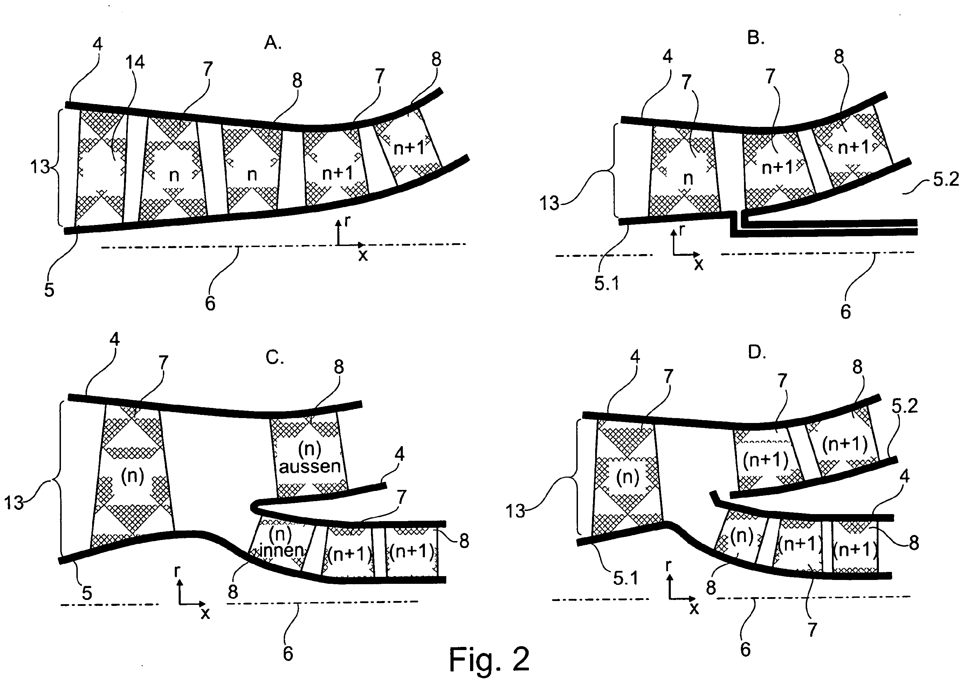

Die vorliegende Erfindung bezieht sich auf Schaufelreihen von Strömungsarbeitsmaschinen wie Bläser, Verdichter, Pumpen und Ventilatoren axialer oder halbaxialer Bauart mit gasförmigem oder flüssigem Arbeitsmedium. Die Strömungsarbeitsmaschine kann eine oder mehrere Stufen mit jeweils einem Rotor und einem Stator umfassen, in Einzelfällen wird die Stufe lediglich durch einen Rotor gebildet. Der Rotor besteht aus einer Anzahl von Schaufeln, die mit der rotierenden Welle der Maschine verbunden sind und Energie an das Arbeitsmedium abgeben. Der Rotor kann mit oder ohne Deckband am äußeren Schaufelende ausgeführt sein. Der Stator besteht aus einer Anzahl feststehender Schaufeln, die nabenseitig wie gehäuseseitig mit festem oder freiem Schaufelende ausgeführt sein können. Die Rotortrommel und die Beschaufelung sind üblicherweise von einem Gehäuse umgeben. Die Maschine kann auch einen Stator vor dem ersten Rotor, ein sogenanntes Vorleitrad aufweisen. Mindestens ein Stator oder Vorleitrad kann - abweichend von der unbeweglichen Fixierung - drehbar gelagert sein, um den Anstellwinkel zu verändern. Eine Verstellung erfolgt beispielsweise durch eine von außerhalb des Ringkanals zugängliche Spindel. Alternativ kann die besagte Strömungsarbeitsmaschine bei Mehrstufigkeit zwei gegenläufige Wellen besitzen, so dass die Rotorschaufelreihen von Stufe zu Stufe die Drehrichtung wechseln. Hierbei existieren keine Statoren zwischen aufeinander folgenden Rotoren. Schließlich kann die Strömungsarbeitsmaschine alternativ eine Nebenstromkonfiguration derart aufweisen, dass sich der einstromige Ringkanal hinter einer bestimmten Schaufelreihe in zwei konzentrische Ringkanäle aufteilt, die ihrerseits mindestens jeweils eine weitere Schaufelreihe beherbergen. Fig. 2 zeigt beispielhaft vier mögliche Konfigurationen der Strömungsarbeitsmaschine.

Die aerodynamische Belastbarkeit und die Effizienz von Strömungsarbeitsmaschinen, beispielsweise Bläsern, Verdichtern, Pumpen und Ventilatoren, wird durch das Wachstum und die Ablösung von Grenzschichten auf den Schaufeln sowie auf den Naben- und Gehäusewänden begrenzt. Der Stand der Technik hält für dieses fundamentale Problem nur bedingt Lösungen bereit. Eine Quelle der in Strömungsarbeitsmaschinen entstehenden Verluste besteht in der Leckageströmung um Schaufeldeckbänder, wie sie häufig am inneren Schaufelende von Statoren oder auch am äußeren Schaufelende von Rotoren zu finden sind. Die Leckageströmung wird üblicherweise durch Dichtspitzen, die innerhalb der Kavität bzw. Ausnehmung, in die das Deckband eingebettet ist, angeordnet sind, klein gehalten. Die Leckageströmung kann dennoch, insbesondere in sehr hoch belasteten Schaufelreihen, die durch einen hohen statischen Druckanstieg und somit einen hohen Antrieb für die Leckageströmung gekennzeichnet sind, sehr schädliche Auswirkungen auf das Leistungsverhalten der Strömungsarbeitsmaschine haben.

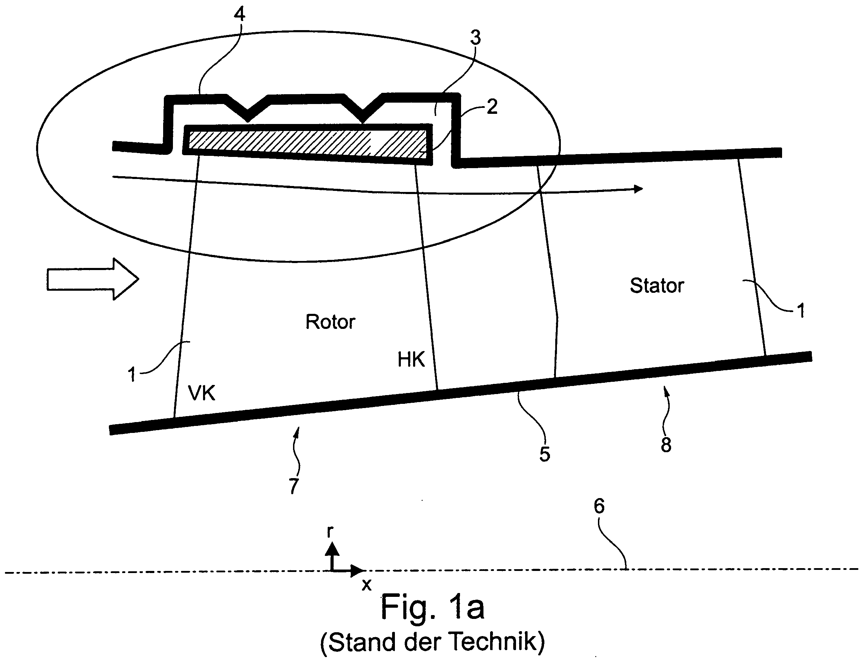

Die Fig.1a zeigt schematisch einen Abschnitt einer Strömungsarbeitsmaschine, bestehend aus einer Rotorschaufelreihe und einer Statorschaufelreihe. Besonders hervorgehoben ist die Deckbandanordnung am äußeren Schaufelende des Rotors. Nach dem Stand der Technik besteht die Deckbandanordnung aus einer großen Kavität, die im Gehäuse vorgesehen ist und das Deckband zur Schaffung einer möglichst glatten äußeren Hauptströmungspfadbegrenzung vollständig in sich aufnimmt.

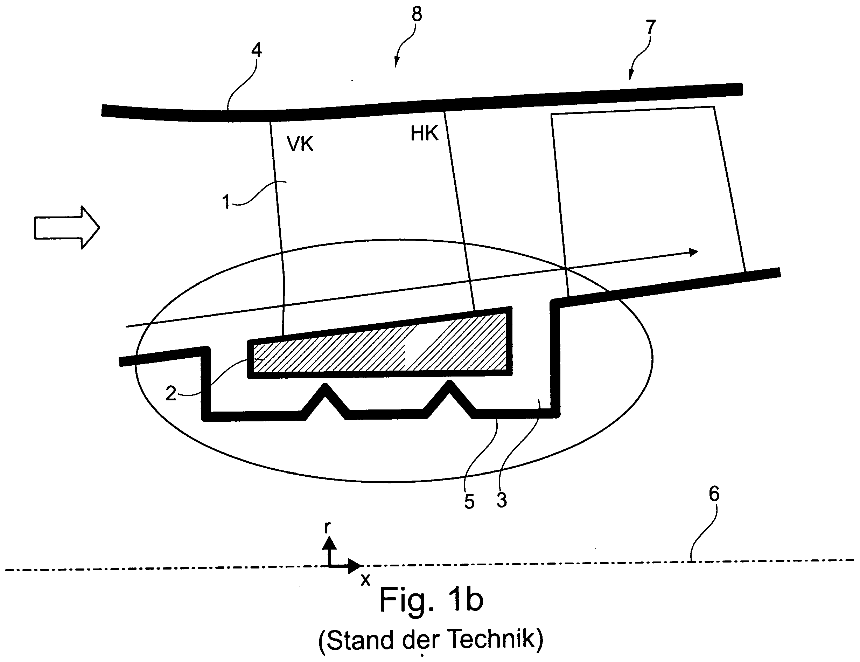

Die Fig.1b zeigt schematisch einen Abschnitt einer Strömungsarbeitsmaschine, bestehend aus einer festen Statorschaufelreihe und einer Rotorschaufelreihe. Besonders hervorgehoben ist die Deckbandanordnung am inneren Schaufelende des festen Stators. Nach dem Stand der Technik besteht die Deckbandanordnung aus einer großen Kavität, die in der Nabe vorgesehen ist und die das Deckband zur Schaffung einer möglichst glatten inneren Hauptströmungspfadbegrenzung vollständig in sich aufnimmt.

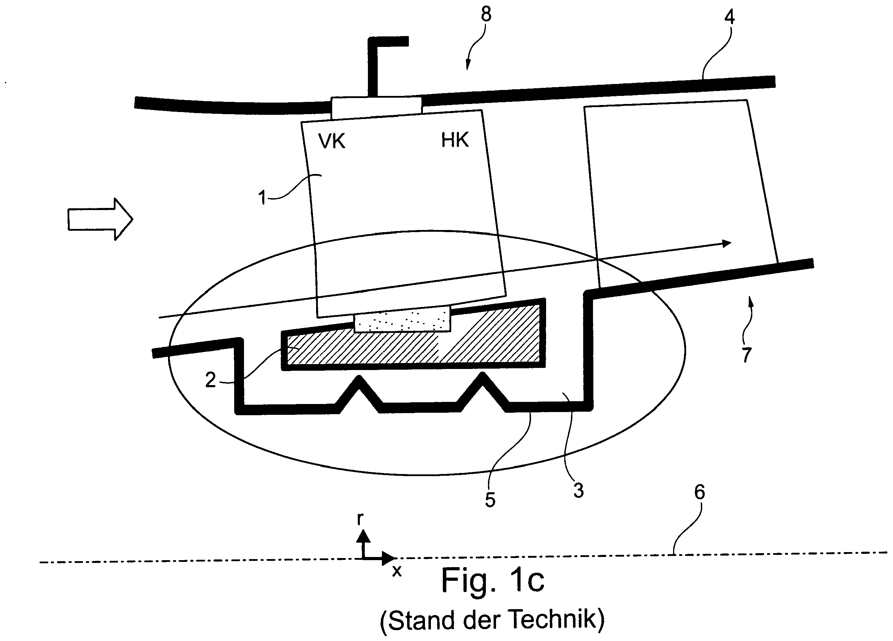

Die Fig.1c zeigt schematisch einen Abschnitt einer Strömungsarbeitsmaschine, bestehend aus einer Reihe verstellbarer (variabler) Statoren und einer Rotorschaufelreihe. Besonders hervorgehoben ist die Deckbandanordnung am inneren Schaufelende des Verstell-Stators. Nach dem Stand der Technik besteht die Deckbandanordnung auch hier aus einer großen Kavität, die in der Nabe vorgesehen ist und die das Deckband zur Schaffung einer möglichst glatten inneren Hauptströmungspfadbegrenzung vollständig in sich aufnimmt.

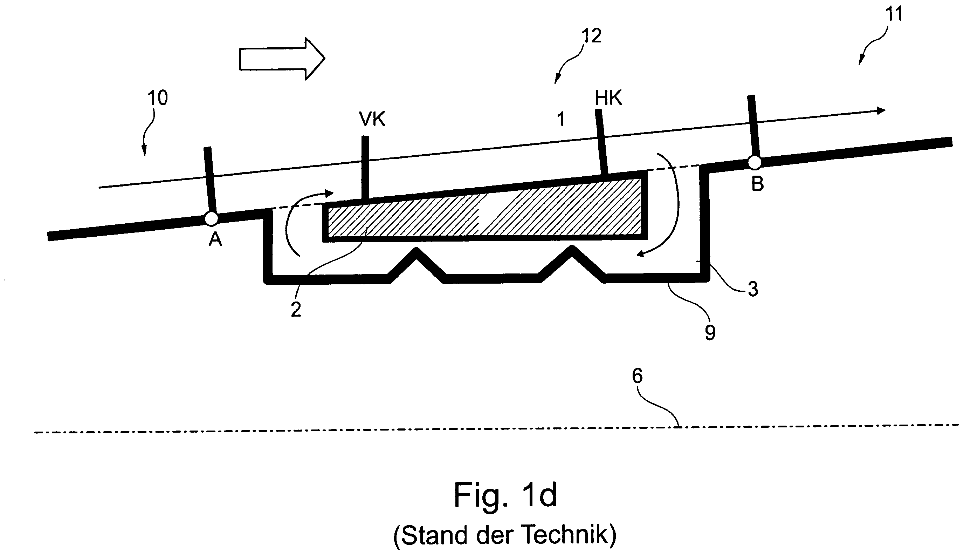

Die Fig.1d zeigt, stellvertretend für Deckbänder von verstellbaren oder festen Rotoren und Statoren, eine Anordnung aus drei Schaufelreihen am Rand des Hauptströmungspfades einer Strömungsarbeitsmaschine, bestehend aus einer stromauf liegenden Schaufelreihe, einer Schaufelreihe mit Deckband und einer stromab liegenden Schaufelreihe. Es kann sich bei dieser Darstellung sowohl um eine Region am Gehäuse als auch eine Region an der Nabe der Strömungsarbeitsmaschine handeln.

Das Deckband ist in ein umgebendes Bauteil oder eine umgebende Baugruppe (Rotornabe oder Gehäuse) eingebettet und fügt sich nach dem Stand der Technik ohne Überstand glatt in den Verlauf des Hauptströmungspfades ein. Das Deckband kann massiv oder auch (wie hier nicht gezeigt) hohl gestaltet sein und besteht aus einem oder mehreren Bauteilen. Die zwischen dem Deckband und dem umgebenden Bauteil auftretende Leckageströmung (kleine Pfeile), die entgegen der Hauptströmungsrichtung (dicker Pfeil) verläuft, wird durch eine Anzahl von Dichtspitzen gemindert. Die Dichtspitzen können am umgebenden Bauteil oder auch (wie hier nicht dargestellt) am Deckband selbst angeordnet sein. Zwischen dem umgebenden Bauteil und dem Deckband besteht üblicherweise eine Relativbewegung. Im Bereich des Deckbandes sind die Vorderkante (VK) und Hinterkante (HK) der betrachteten Schaufelreihe angedeutet. Stromauf des Deckbandes ist die Hinterkante der stromauf liegenden Schaufelreihe angedeutet; der Fußpunkt dieser HK ist mit A gekennzeichnet. Stromab des Deckbandes ist die Vorderkante der stromab liegenden Schaufelreihe angedeutet; der Fußpunkt dieser VK ist mit B gekennzeichnet. Ein dünner langer Pfeil charakterisiert die randnahe Strömung entlang der im Wesentlichen glatt verlaufenden Berandung des Hauptströmungspfades. Dem Stand der Technik entsprechend ragt das Deckband nicht über die Verbindungslinie zwischen A und B hinaus in den Hauptströmungspfad. Ein sehr geringfügiger Überstand, der aber gemessen gegen andere Abmessungen des Deckbandes untergeordnet klein ist, kann beim Stand der Technik aufgrund von Fertigungstoleranzen auftreten oder auch an Betriebspunkten der Strömungsarbeitsmaschine abseits des Auslegungszustandes durch thermische Verstimmung der Bauteile zustande kommen. Wie in Fig.1d skizziert tritt die Strömung im Randbereich des Hauptströmungspfades ohne Beeinflussung durch einen Absatz oder eine Unebenheit im Konturverlauf in die Schaufelreihe mit Deckband ein und läuft störungsfrei über das in Flucht mit der restlichen Kontur angeordnete Deckband hinweg.

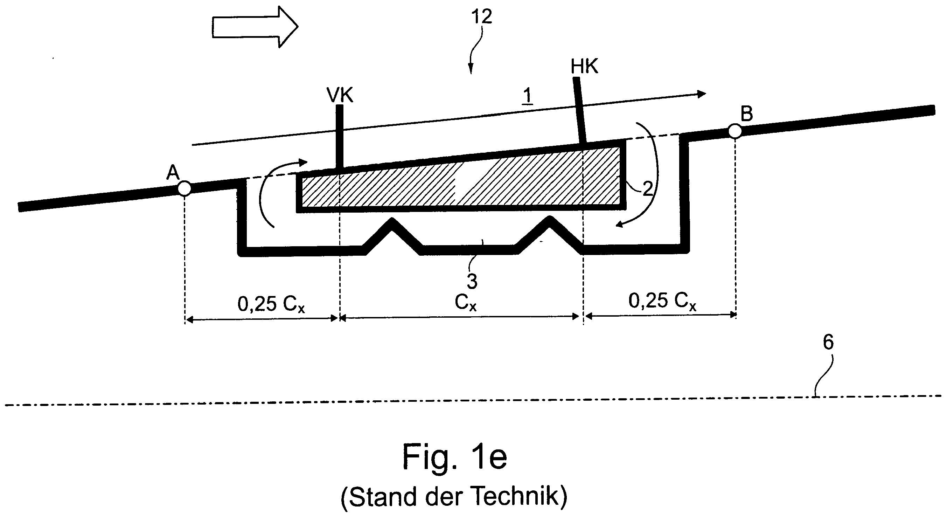

Für den Fall, dass es stromauf des Deckbandes keine Schaufelreihe gibt, ist die Lage des Punktes A durch einen Abstand zur Vorderkante von 25% der axialen Länge Cx am Rand der mit Deckband versehenen Schaufelreihe bestimmt, siehe Fig.1e.

Für den Fall, dass es stromab des Deckbandes keine Schaufelreihe gibt, ist die Lage des Punktes B durch einen Abstand zur Hinterkante von 25% der axialen Länge Cx am Rand der mit Deckband versehenen Schaufelreihe bestimmt, siehe Fig.1e. Bei Deckbandanordnungen nach dem Stand der Technik ist der Leckagestrom im Wesentlichen durch den Spalt gegeben, den die Dichtspitzen mit der gegenüberliegenden Kontur bilden. Dabei steigt der Leckagestrom mit der aerodynamischen Belastung, die für die mit Deckband versehene Schaufelreihe gewählt wird, stark an. Die Folge sind schlechte Betriebskennwerte im Hinblick auf den Wirkungsgrad, die Stabilität und die Weite des Betriebsbereichs der Strömungsarbeitsmaschine.

Aus US 3 640 638 A ist ferner ein Axialkompressor bekannt, bei welchem eine Statorschaufel mit einem Deckband versehen ist, wobei zwischen dem Deckband und einem Rotor ein Spalt vorhanden ist. Eine Vorderkante des Deckbandes weist einen größeren Durchmesser als eine Hinterkante einer Rotoroberfläche auf. Ebenso weist eine Hinterkante des Deckbandes einen größeren Durchmesser auf als eine Vorderkante einer nachfolgenden Rotoroberfläche. Dadurch soll ein statischer Druckgradient zwischen den Öffnungen des Spalts derart eingestellt werden, dass Gas durch den Spalt in Richtung stromab strömt.

EP 0 799 973 A1 zeigt außerdem eine Wandkontur einer axialen Strömungsmaschine, bei welcher unmittelbar am Austritt der Laufschaufeln die rotorseitige und/oder statorseitige Wand des durchströmten Kanals mit einem Knickwinkel versehen ist.

GB 1 149 616 A beschreibt Modifikationen zur Verbesserung von Impulsturbinen. Dabei stehen die Oberflächen eines Deckbands im Vergleich zur feststehenden Berandung des Strömungskanals in den Hauptströmungspfad vor.

Der Erfindung liegt die Aufgabe zugrunde, eine Strömungsarbeitsmaschine der eingangs genannten Art zu schaffen, welche die Nachteile des Standes der Technik vermeidet und Deckband-Leckageströmungen minimiert.

Erfindungsgemäß wird die Aufgabe durch die Merkmalskombination des Hauptanspruchs gelöst, die Unteransprüche zeigen weitere vorteilhafte Ausgestaltungen der Erfindung.

Im Einzelnen umfasst die vorliegende Erfindung die Gestaltung eines Deckbandes der Schaufelreihe einer Strömungsarbeitsmaschine, derart, dass an wenigstens einem Ort des Umfangs und wenigstens in einem der Bereiche der Vorder- oder Hinterkante die Kontur des Deckbandes über eine geradlinige Verbindung der nächst gelegenen Schaufelkantenfußpunkte umliegender Schaufelreihen hinaus steht, derart, dass im Bereich einer der Öffnungen, mit denen die Ausnehmung, in welche das Deckband eingebettet ist, mit dem Hauptströmungspfad in Verbindung steht, ein geschwungener Verlauf der Hauptströmungspfadkontur und der Stromlinien an der Berandung des Hauptströmungspfades vorliegt.

Erfindungsgemäß ist für den Einsatz in einer Strömungsarbeitsmaschine eine Schaufeldeckbandanordnung geschaffen, die durch einen lokalen Überstand im Bereich der Vorderkante und/oder der Hinterkante den Verlauf der Strömung am Rand des Hauptströmungspfades zusätzlich beeinflusst und auf diese Weise das für die Deckband-Leckageströmung bestimmende, an der Ausnehmung wirkende Druckgefälle verringert.

Im Folgenden wird die Erfindung anhand von Ausführungsbeispielen in Verbindung mit den Figuren beschrieben. Dabei zeigt:

Fig. 1a    Schaufel nach dem Stand der Technik, Rotor
Fig. 1b    Schaufel nach dem Stand der Technik, fester Stator
Fig. 1c    Schaufel nach dem Stand der Technik, Verstell-Stator
Fig. 1d    Schaufeldeckbandkonfiguration, Stand der Technik, mit umliegenden Schaufelreihen
Fig. 1e    Schaufeldeckbandkonfiguration, Stand der Technik, ohne umliegende Schaufelreihen
Fig. 2    mögliche Konfigurationen erfindungsrelevanter Strömungsarbeitsmaschinen
Fig. 3a    Beispiel einer Deckbandkonfiguration, die nicht Gegenstand der Erfindung ist, Überstand im Vorderkantenbereich
Fig. 3b    Weiteres Beispiel einer Deckbandkonfiguration, Überstand mit Nase im Vorderkantenbereich
Fig. 3c    Erfindungsgemäße Deckbandkonfiguration, Überstand und Überlappung im Vorderkantenbereich

Fig. 4a    Weiteres Beispiel einer Deckbandkonfiguration, Überstand im Hinterkantenbereich, stumpfkantig

Fig. 4b    Weiteres Beispiel einer Deckbandkonfiguration, Überstand im Hinterkantenbereich, abgerundet

Fig. 4c    Weiteres Beispiel einer Deckbandkonfiguration, Überstand mit Spitze im Hinterkantenbereich

Fig. 4d    Weiteres Beispiel einer Deckbandkonfiguration, Überstand mit Nase im Hinterkantenbereich

Fig. 4e    Weiteres Beispiel einer Deckbandkonfiguration, Überstand und Überdeckung im Hinterkantenbereich

Fig. 5a    Weiteres Beispiel einer Deckbandkonfiguration, Überstand im Vorder- und Hinterkantenbereich, geradlinige Kontur innerhalb der Schaufelreihe

Fig. 5b    Weiteres Beispiel einer Deckbandkonfiguration, Überstand im Vorder- und Hinterkantenbereich, konvexe Kontur innerhalb der Schaufelreihe

Fig. 5c    Weiteres Beispiel einer Deckbandkonfiguration, Überstand im Vorder- und Hinterkantenbereich, konkave Kontur innerhalb der Schaufelreihe

Fig. 5d    Vorteilhafte Ausgestaltung einer Deckbandkonfiguration gemäß der Erfindung, Überstand und Überlappung im Vorder- und Hinterkantenbereich

Fig. 6a    Größe des Überstandes im Vorderkantenbereich

Fig. 6b    Größe des Überstandes im Hinterkantenbereich

Fig. 7    Bevorzugte Axialersteckungen des Deckbandes gemäß der Erfindung

Fig. 8    Periodische Umfangsvariation des Überstandes im Vorderkantenbereich, räumliche Ansicht

Eine konventionelle Deckbandkonfiguration nach dem Stand der Technik, wie sie in Fig.1d gezeigt ist, sieht einen Eintritt der Randströmung in die Schaufelreihe mit Deckband ohne Beeinflussung durch einen Absatz oder eine Unebenheit im Konturverlauf vor. Dabei läuft die Strömung störungsfrei über die Öffnungen der Ausnehmung, die dem Hauptströmungspfad zugewandte und in Flucht mit der stromauf und stromab befindlichen Kontur angeordnete Seite des Deckbandes hinweg. Die an den Öffnungen der Ausnehmung anliegenden statischen Drücke, die den Leckagestrom bestimmen, sind bei einer solchen Anordnung fest vorgegeben.

Zweck der vorliegenden erfindungsgemäßen Lösung ist es, den statischen Druck an der Anströmkante und der Abströmkante des Deckbandes durch besondere Gestalt des Deckbandes im Bereich der Schaufelvorder- und /oder der Schaufelhinterkante so zu beeinflussen, dass das statische Druckgefälle zwischen den Öffnungen und damit der Leckagestrom verringert oder idealerweise unterbunden wird.

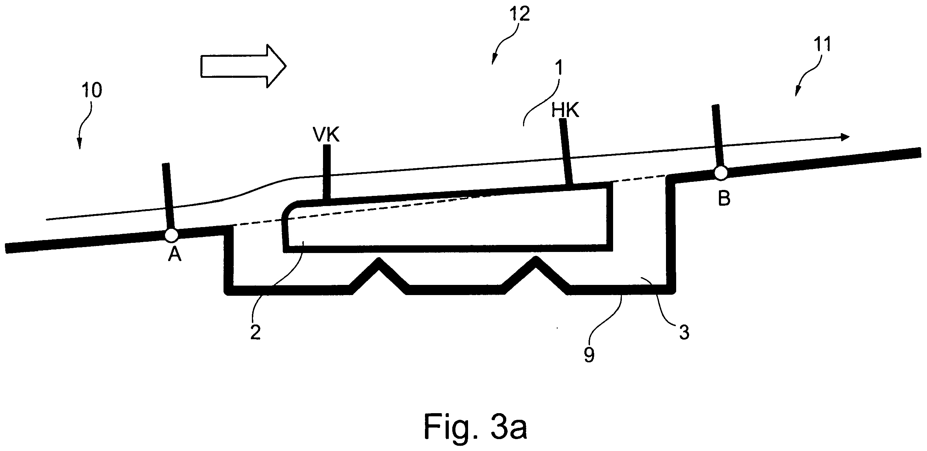

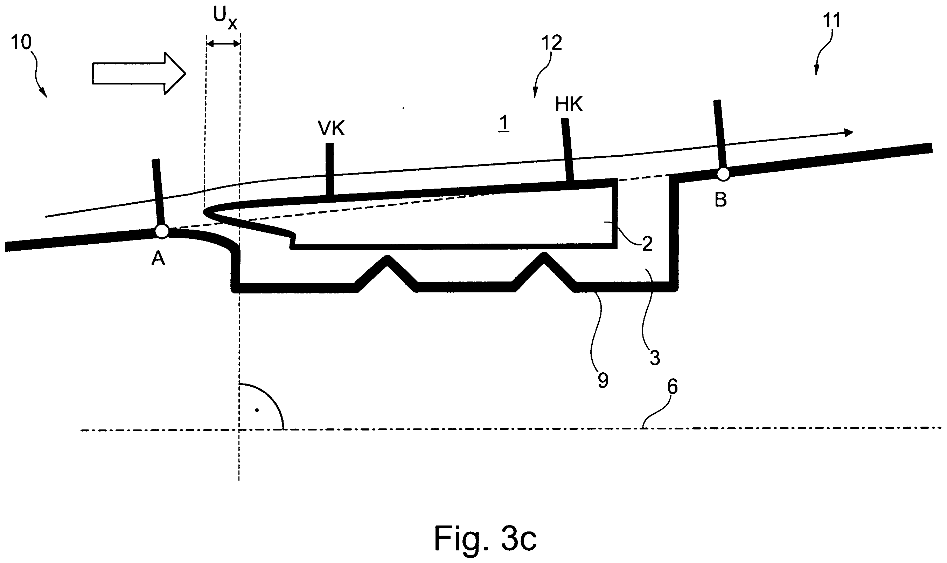

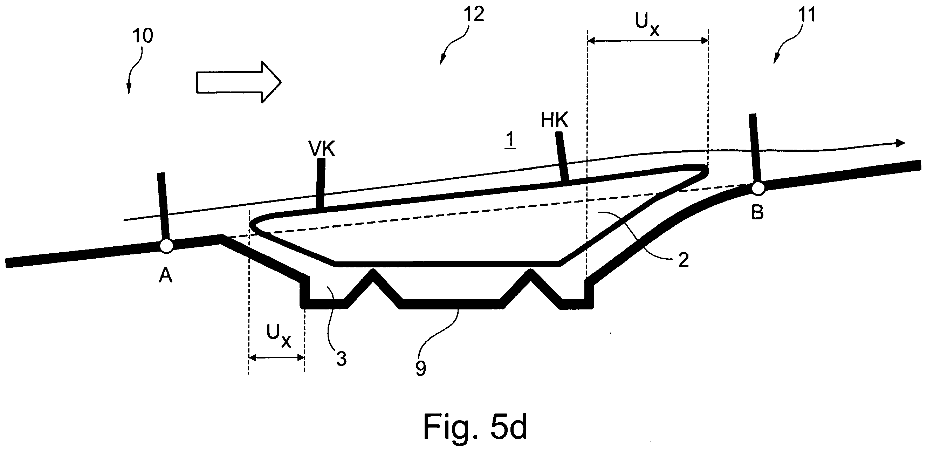

Deckbandkonfigurationen sind in Fig.3a bis Fig. 5d dargestellt, wobei in den Fig. 3c und 5d erfindungsgemäße Deckbandkonfigurationen dargestellt sind. Entscheidend für die vorliegende Erfindung ist allein die Konturformgebung des Deckbandes in Nähe des Hauptströmungspfades. Nicht Gegenstand der Erfindung ist die Gestalt des Deckbandes im tieferen Inneren der Ausnehmung, in die das Deckband eingebettet ist. Ebenfalls nicht Gegenstand der Erfindung ist die genaue Gestaltung der die Ausnehmung umgebenden Bauteile und die Gestaltung der Dichtspitzen. Die genannten nicht erfindungsrelevanten Merkmale sind hier zum Zwecke der Übersichtlichkeit nur soweit in vereinfachter Form skizziert, wie dies für die Darstellung und das Verstehen relevanter Zusammenhänge der Erfindung notwendig ist.

Die Fig.3a bis Fig.3b zeigen beispielhaft einige Deckbandkonfigurationen mit einem Überstand im Bereich der Vorderkante der betreffenden Schaufelreihe. Die Fig. 3c zeigt weiterhin eine erfindungsgemäße Deckbandkonfiguration. Ein erfindungsgemäßer Überstand ist dadurch gekennzeichnet, dass in mindestens einem frei wählbaren Längsschnitt der Strömungsarbeitsmaschine ein Anteil des Deckbandes über die Verbindungslinie A-B hinaus in den Hauptströmungspfad steht und auf diese Weise einen spürbaren Widerstand für die herannahende Strömung darstellt.

Fig.3a zeigt ein Beispiel, bei dem die überstehende Anströmkante des Deckbandes zur besseren Strömungsführung mit einer Abrundung versehen ist, die stromauf oder auch stromab der Schaufelvorderkante enden kann.

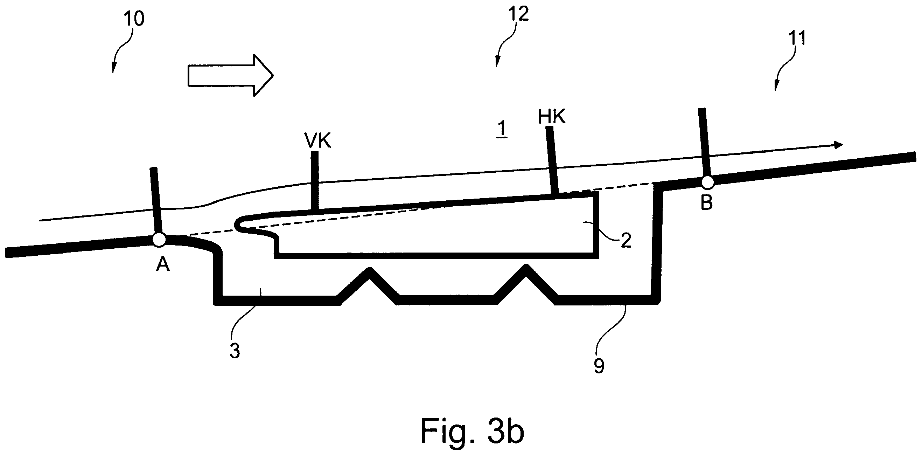

Fig.3b zeigt ein Beispiel, bei dem die überstehende Anströmkante des Deckbandes zur Staupunktbildung und zur besseren Strömungsführung mit einer Nase versehen ist, deren Rundung auf der hauptströmungspfadzugewandten Seite stromauf oder auch stromab der Schaufelvorderkante enden kann.

Fig.3c zeigt eine erfindungsgemäße Lösung, bei der die überstehende Anströmkante des Deckbandes zur Staupunktbildung und zur besseren Strömungsführung mit einer Überlappung Ux versehen ist. Die Überlappung ist dadurch gekennzeichnet, dass die in Richtung stromauf begrenzende Wandung der Ausnehmung nicht vollständig radial und geradlinig, sondern wenigstens örtlich schräg stromauf orientiert ist, sodass eine ebenfalls schräge Gestaltung des Deckbandes auf der hauptströmungsabgewandten Seite die Ausbildung eines gegen die radiale Richtung geneigten und gegebenenfalls gekrümmten Kanals zwischen dem Deckband und dem umgebenden Bauteil ergibt.

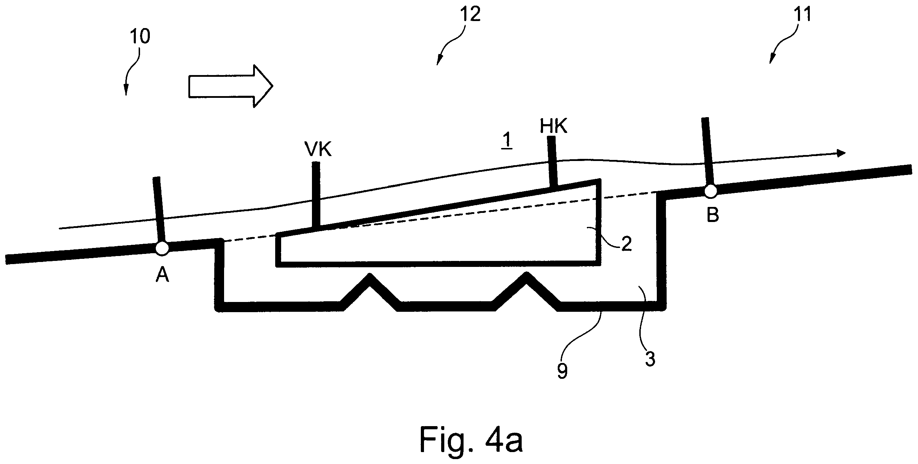

Die Fig.4a bis Fig.4e zeigen beispielhaft einige Deckbandkonfigurationen mit einem Überstand im Bereich der Hinterkante der betreffenden Schaufelreihe.

Ein Überstand ist dadurch gekennzeichnet, dass in mindestens einem frei wählbaren Längsschnitt der Strömungsarbeitsmaschine ein Anteil des Deckbandes über die Verbindungslinie A-B hinaus in den Hauptströmungspfad steht und auf diese Weise einen Rücksprung der strömungsbegrenzenden Kontur darstellt.

Fig.4a zeigt ein Beispiel, bei dem die Abströmkante des Deckbandes im Wesentlichen stumpfkantig ausgeführt ist.

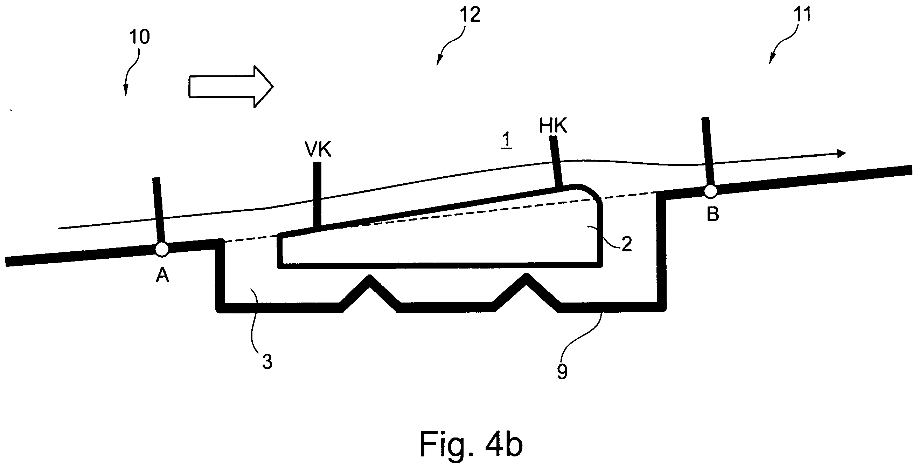

Fig.4b zeigt ein Beispiel, bei dem die Abströmkante des Deckbandes zur besseren Strömungsführung mit einer Abrundung versehen ist, die stromab oder auch stromauf der Schaufelhinterkante enden kann.

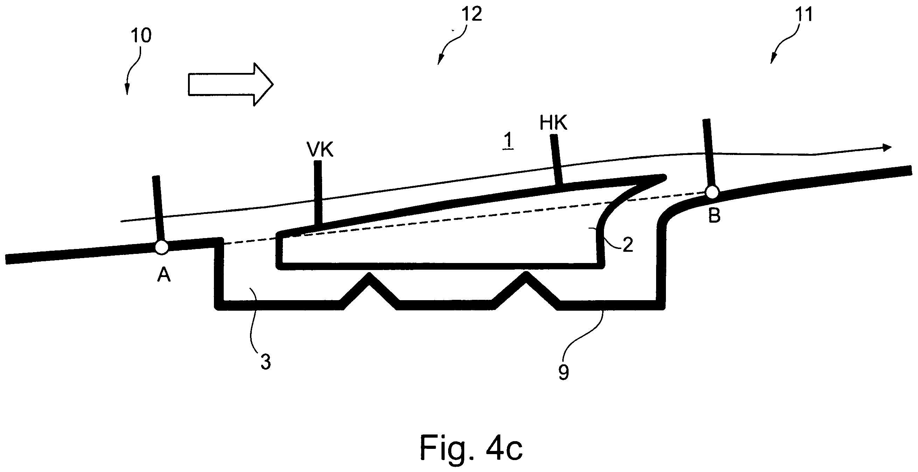

Fig.4c zeigt ein Beispiel, bei dem die Abströmkante des Deckbandes im Wesentlichen scharfkantig ausgeführt ist.

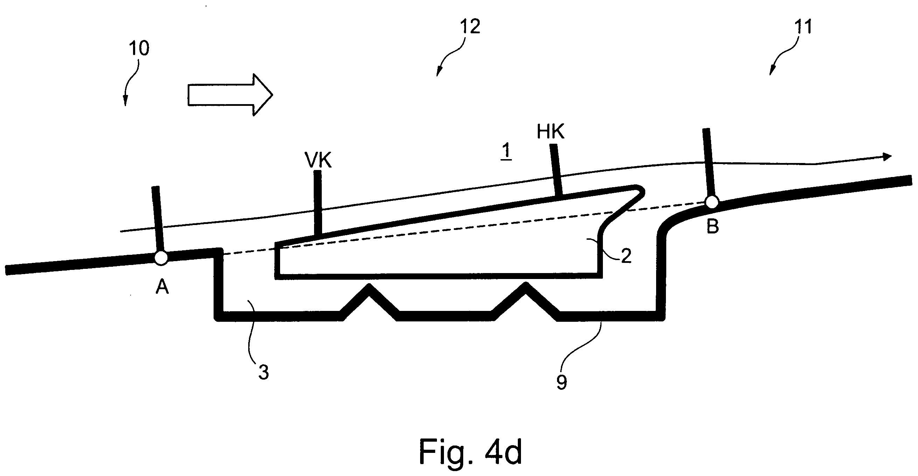

Fig.4d zeigt ein Beispiel, bei dem die Abströmkante des Deckbandes zur besseren Strömungsführung mit einer Nase versehen ist, deren Rundung auf der hauptströmungspfadzugewandten Seite stromab oder auch stromauf der Schaufelhinterkante enden kann.

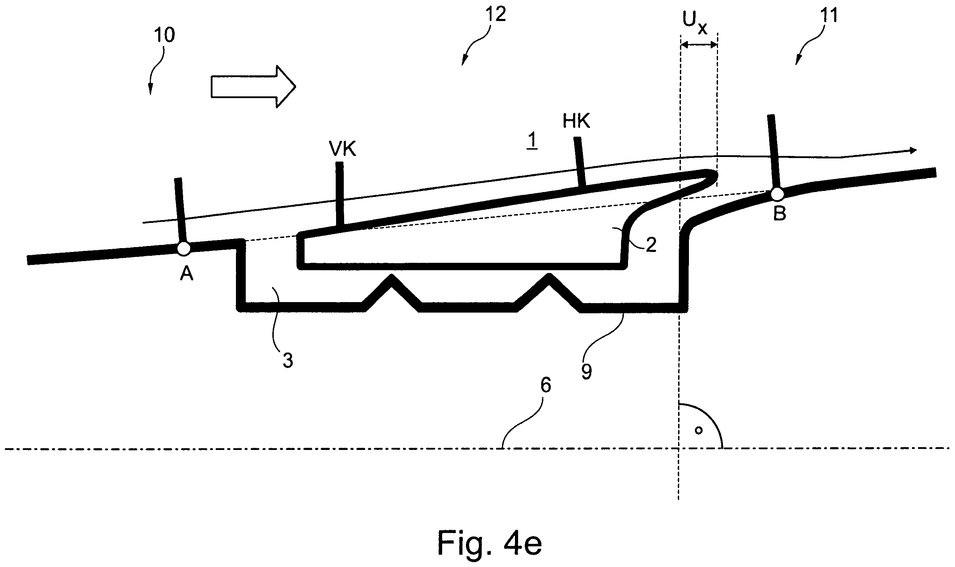

Fig.4e zeigt ein Beispiel, bei dem die Abströmkante des Deckbandes mit einer Überlappung Ux versehen ist. Die Überlappung ist dadurch gekennzeichnet, dass die in Richtung stromab begrenzende Wandung der Ausnehmung nicht vollständig radial und geradlinig, sondern wenigstens örtlich schräg stromab orientiert ist, sodass eine ebenfalls schräge Gestaltung des Deckbandes auf der hauptströmungsabgewandten Seite die Ausbildung eines gegen die radiale Richtung geneigten und gegebenenfalls gekrümmten Kanals zwischen dem Deckband und dem umgebenden Bauteil ergibt.

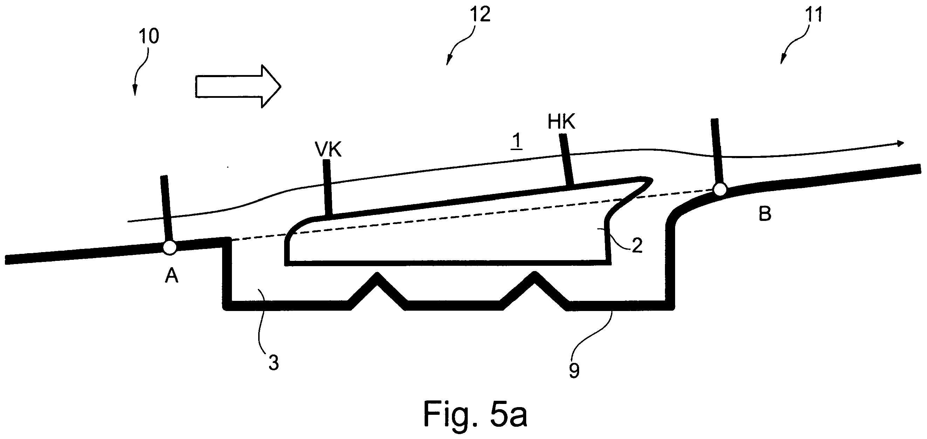

Die Fig.5a bis Fig.5c zeigen beispielhaft einige Deckbandkonfigurationen mit einem Überstand im Bereich der Vorderkante und im Bereich der Hinterkante der betreffenden Schaufelreihe. Die Fig. 5d zeigt weiterhin eine erfindungsgemäße Deckbandkonfiguration. Ein erfindungsgemäßer Überstand ist dadurch gekennzeichnet, dass der in mindestens einem frei wählbaren Längsschnitt der Strömungsarbeitsmaschine ein Anteil des Deckbandes über die Verbindungslinie A-B hinaus in den Hauptströmungspfad steht.

Fig.5a zeigt ein Beispiel, bei dem die vorstehende Anströmkante des Deckbandes zur besseren Strömungsführung mit einer Abrundung versehen ist, bei der die Abströmkante des Deckbandes nasenförmig gestaltet ist, und bei der die hauptströmungspfadzugewandte Kontur des Deckbandes innerhalb der Schaufelreihe im Wesentlichen geradlinig verläuft.

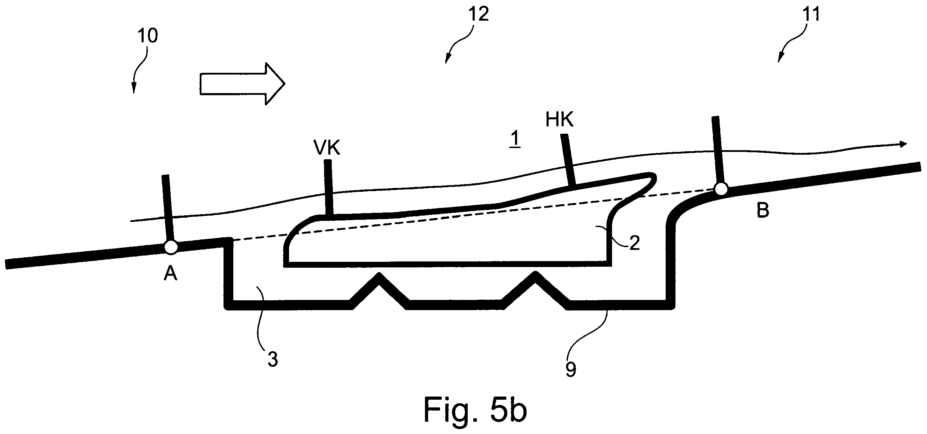

Fig.5b zeigt ein Beispiel, bei dem die hauptströmungspfadzugewandte Kontur des Deckbandes innerhalb der Schaufelreihe im Wesentlichen konkav verläuft.

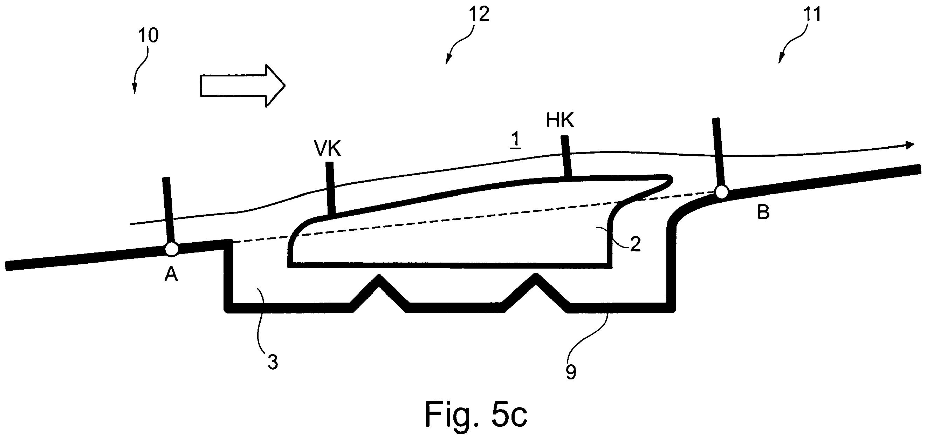

Fig.5c zeigt ein Beispiel, bei dem die hauptströmungspfadzugewandte Kontur des Deckbandes innerhalb der Schaufelreihe im Wesentlichen konvex verläuft.

Fig.5d zeigt eine erfindungsgemäße Lösung, bei der die vorstehende Anströmkante des Deckbandes und ebenfalls die vorstehende Abströmkante des Deckbandes zur besseren Strömungsführung mit Überlappung ausgeführt sind, und bei der die hauptströmungspfadzugewandte Kontur des Deckbandes innerhalb der Schaufelreihe im Wesentlichen geradlinig verläuft.

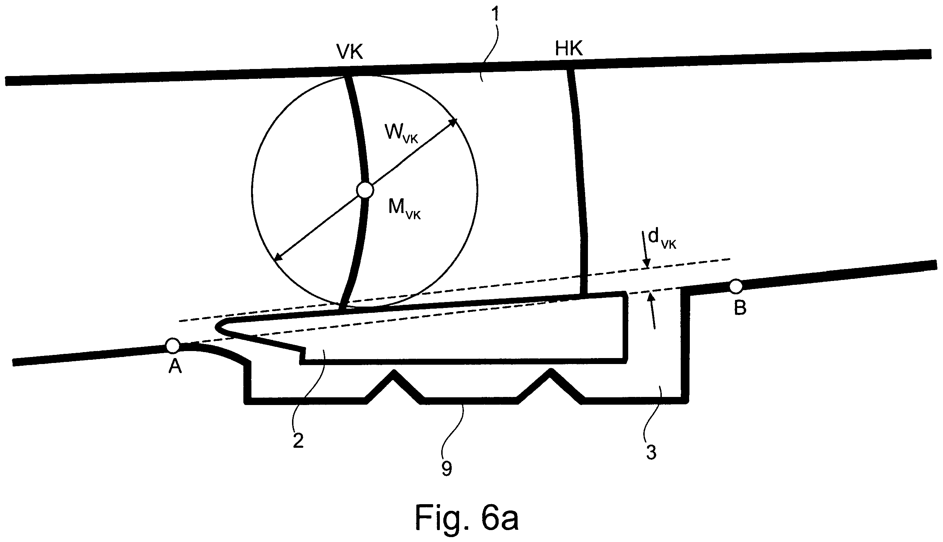

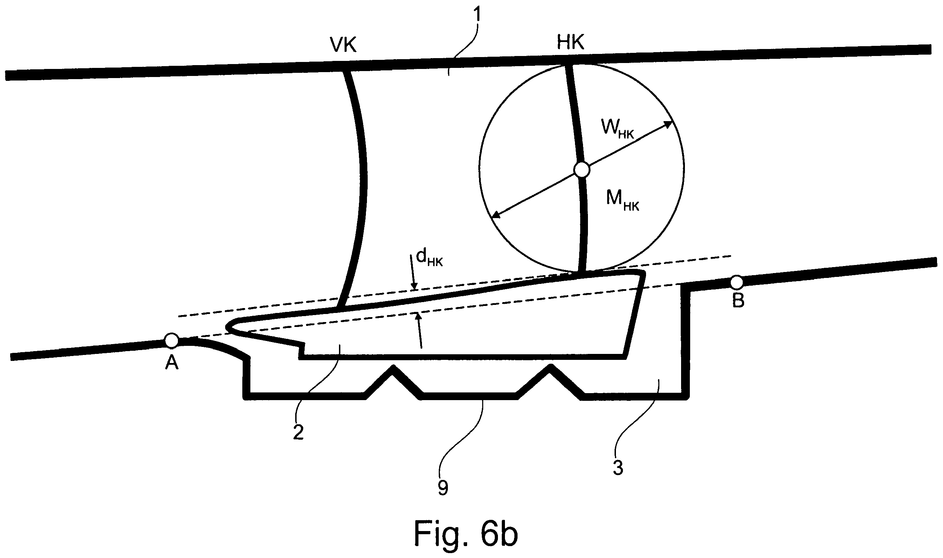

In Fig.6a und Fig.6b werden Größen zur Quantifizierung des Deckbandüberstandes definiert.

Die Fig.6a zeigt eine Konfiguration mit Deckbandüberstand im Vorderkantenbereich. Eine parallel zur Verbindungslinie A-B verlaufende Tangente an die Stelle maximalen Deckbandüberstandes definiert die Größe des Deckbandüberstandes. Die Größe des maximalen Überstand dVK wird erfindungsgemäß relativ zur Ringkanalweite WVK an der Vorderkante festgelegt. Die Ringkanalweite WVK ergibt sich als Durchmesser eines in den Ringkanal (Hauptströmungspfad) einbeschriebenen Kreises mit dem Mittelpunkt MVK auf der Vorderkante. Erfindungsgemäß gilt: dVK / WVK > 0,01.

Die Fig.6b zeigt eine Konfiguration mit Deckbandüberstand im Hinterkantenbereich. Eine parallel zur Verbindungslinie A-B verlaufende Tangente an die Stelle maximalen Deckbandüberstandes definiert die Größe des Deckbandüberstandes. Die Größe des maximalen Überstands dHK wird erfindungsgemäß relativ zur Ringkanalweite WHK an der Hinterkante festgelegt. Die Ringkanalweite WHK ergibt sich als Durchmesser eines in den Ringkanal (Hauptströmungspfad) einbeschriebenen Kreises mit dem Mittelpunkt MHK auf der Hinterkante. Erfindungsgemäß gilt: dHK / WHK > 0,01.

Befindet sich der maximal gefundene Überstand innerhalb der Schaufelreihe zwischen Vorder- und Hinterkante, wird der Deckbandüberstand im Vorderkantenbereich dVK direkt an der Vorderkante und der Deckbandüberstand im Hinterkantenbereich dHK direkt an der Hinterkante ermittelt.

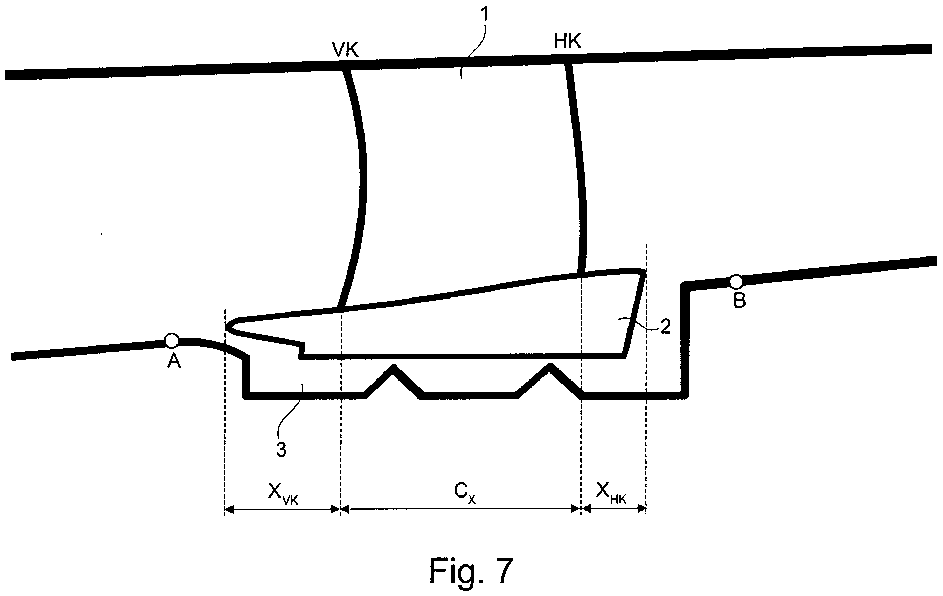

Die Fig.7 definiert günstige Axialerstreckungen des erfindungsgemäßen Deckbandes mit Überstand. Aufgrund des Druckfeldes, das durch den Deckbandüberstand im Bereich der Deckbandkanten entsteht, ist es besonders günstig, einen vergleichsweise langen freien Abschnitt XVK des Deckbandes stromauf der Schaufelvorderkante vorzusehen. Wie aus Fig. 7 ersichtlich, sollte dieser bevorzugt mindestens 7% der axialen Erstreckung der Schaufelreihe am Rand des Hauptströmungspfades betragen.

$$\frac{X_{VK}}{C_X} \rangle 0{,}07$$

Somit gilt: Aus gleichen Gründen ist es günstig, einen vergleichsweise langen freien Abschnitt XHK des Deckbandes stromab der Schaufelhinterkante vorzusehen. Wie aus Fig. 7 ersichtlich, sollte dieser bevorzugt mindestens 7% der axialen Erstreckung der Schaufelreihe am Rand des Hauptströmungspfades betragen.

$$\frac{X_{HK}}{C_X} \rangle 0{,}07$$

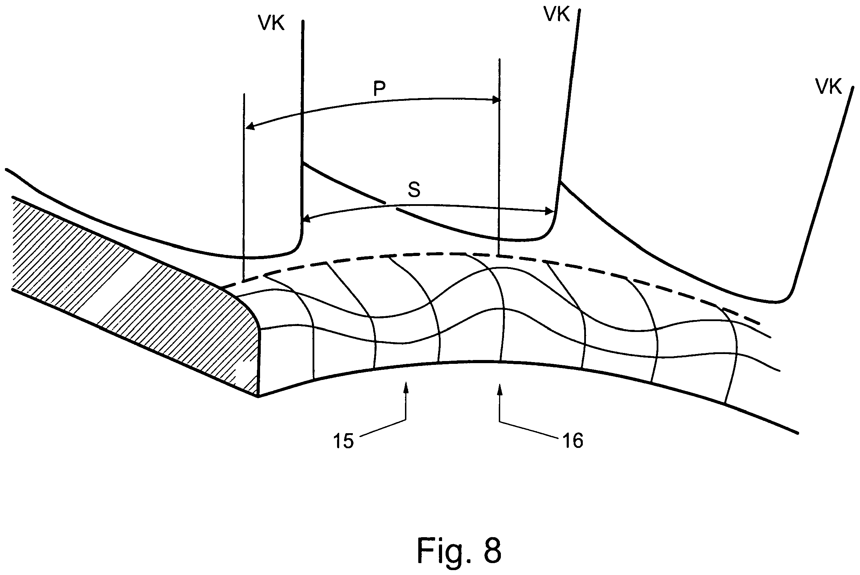

Somit gilt: Die Fig.8 zeigt in räumlicher Ansicht den Vorderkantenbereich einer Schaufelreihe mit Deckband über einem Teil des Umfangs. Der Deckbandüberstand ist hier besonders günstig gestaltet, der Art, dass der Deckbandüberstand und die Form der Anströmkante des Deckbandes gemäß einer vorteilhaften Ausgestaltung der Erfindung periodisch in Umfangsrichtung der Schaufelreihe, zu der das Deckband gehört, variiert. Vorteilhaft ist es, wenn eine ganze Periode oder auch ein Vielfaches der Periode der besagten Überstandsvariation im Wesentlichen mit einer Schaufelteilung S der betreffenden Schaufelreihe übereinstimmt: n x P = S. Die Darstellung in Fig. 8 zeigt das vorteilhafte Konzept am Beispiel der Vorderkantenregion einer Schaufelreihe mit Deckband, doch gilt das hier Beschriebene ebenfalls für einen Deckbandüberstand im Hinterkantenbereich.

Die vorliegende Erfindung erlaubt eine deutlich höhere aerodynamische Belastbarkeit von Rotoren und Statoren in Strömungsarbeitmaschinen, bei gleich bleibendem oder erhöhtem Wirkungsgrad. Bei Einsatz des Konzeptes im Hochdruckverdichter eines Flugtriebwerkes mit rund 100kN (25000 Pfund) Schub ist eine Reduzierung des spezifischen Kraftstoffverbrauches von bis zu 0,5% zu erwarten.

Bezugszeichenliste

| | |
|---|---|
| 1 | Schaufel |
| 2 | Deckband / Schaufeldeckband (SDB) |
| 3 | Ausnehmung |
| 4 | Gehäuse (stehend) |
| 5 | Nabe (rotierend) / Rotortrommel |
| 6 | Maschinenachse |
| 7 | Rotor |
| 8 | Stator |
| 9 | relativ zum Schaufeldeckband (SDB) bewegtes Bauteil |
| 10 | Schaufelreihe stromauf |
| 11 | Schaufelreihe (stromab) |
| 12 | Schaufelreihe |
| 13 | Ringkanal |
| 14 | Vorleitrad |
| 15 | **minimaler** lokaler Überstand |
| 16 | **maximaler** lokaler Überstand |

**Patentansprüche**

**1.** Strömungsarbeitsmaschine mit einem Hauptströmungspfad, in welchem zumindest eine Reihe von Schaufeln (1) mit einem Deckband (2) angeordnet ist, welches bezogen auf einen Längsschnitt der Strömungsarbeitsmaschine wenigstens teilweise in eine Ausnehmung (3) eines Bauteils eingebettet ist, so dass die Ausnehmung (3) über Öffnungen mit dem Hauptströmungspfad in Verbindung steht, wobei das Bauteil und die Schaufeln (1) eine rotierende Relativbewegung zueinander ausführen, und wobei sich im Betrieb der Strömungsarbeitsmaschine um das Deckband (2) in der Ausnehmung (3) eine Leckageströmung aufgrund eines Druckgefälles über die Öffnungen einstellt,

- wobei das Deckband (2), bezogen auf eine Richtung der Maschinenachse (6) der Strömungsarbeitsmaschine zwischen zwei an einer Berandung des Hauptströmungspfades der Strömungsarbeitsmaschine befindlichen Referenzpunkten (A) und (B) angeordnet ist,
- wobei der Referenzpunkt (A) durch einen dem Deckband nächst gelegenen Fußpunkt einer Hinterkante einer stromauf des Deckbandes (2) befindlichen Schaufelreihe oder durch einen Randpunkt an der Berandung des Hauptströmungspfades, welche dem Deckband zugewandt ist, gebildet wird, der sich 25% der axialen Erstreckung der mit dem Deckband (2) versehenen Schaufelreihe stromauf einer Vorderkante der mit dem Deckband (2) versehenen Schaufelreihe befindet,
- wobei der Referenzpunkt (B) durch einen dem Deckband nächst gelegenen Fußpunkt einer Vorderkante der stromab des Deckbandes (2) befindlichen Schaufelreihe oder durch einen Randpunkt an der Berandung des Hauptströmungspfades, welche dem Deckband zugewandt ist, gebildet wird, der sich 25% der axialen Erstreckung der mit dem Deckband (2) versehenen Schaufelreihe stromab einer Hinterkante der mit dem Deckband (2) versehenen Schaufelreihe befindet,
- wobei das Deckband (2) an wenigstens einem Ort des Umfangs in wenigstens einem der Bereiche der Vorder- oder Hinterkante der zugehörigen Schaufelreihe über eine geradlinige Verbindung der Referenzpunkte (A) und (B) hinaus mit einem Deckbandüberstand (dVK, dHK) in den Hauptströmungspfad steht, derart, dass aufgrund dieses Deckbandüberstandes (dVK, dHK) im Bereich wenigstens einer Öffnung der Ausnehmung (3), ein geschwungener Verlauf der effektiven Hauptströmungspfadbegrenzung sowie der Stromlinien an der Berandung des Hauptströmungspfades erzielt wird, wodurch sich das an der Ausnehmung (3) wirkende Druckgefälle, welches die Leckageströmung bestimmt, verringert,

**dadurch gekennzeichnet,**
**dass** eine überstehende Anströmkante des Deckbandes (2) zur besseren Strömungsführung mit einer Abrundung versehen ist, welche stromauf oder stromab der Schaufelvorderkante endet, und
**dass** die überstehende Anströmkante des Deckbandes (2) zur Staupunktbildung und zur besseren Strömungsführung eine Überlappung (Ux) mit der die Ausnehmung (3) stromauf begrenzenden Wandung aufweist, derart, dass die in Hauptströmungsrichtung betrachtet vordere begrenzende Wandung der Ausnehmung (3) nicht in axialer Richtung, sondern wenigstens örtlich zur Hauptströmungsrichtung schräg stromauf orientiert ist und durch eine zur Hauptströmungsrichtung schräge Gestaltung der Rückseite des Deckbandes (2) in diesem Bereich ein gegen die radiale Richtung geneigter und/oder gekrümmter Kanal zwischen dem Deckband (2) und dem umgebenden Bauteil ausgebildet wird.

2. Strömungsarbeitsmaschine nach Anspruch 1, **dadurch gekennzeichnet, dass** die überstehende Anströmkante des Deckbandes (2) zur Staupunktbildung und zur besseren Strömungsführung mit einer Nase versehen ist, deren Rundung auf der hauptströmungspfadzugewandten Seite stromauf oder stromab der Schaufelvorderkante endet.

3. Strömungsarbeitsmaschine nach einem der Ansprüche 1 oder 2, **dadurch gekennzeichnet, dass** eine oder die überstehende Abströmkante des Deckbandes (2) im Wesentlichen stumpfkantig ausgeführt ist.

4. Strömungsarbeitsmaschine nach einem der Ansprüche 1 bis 3, **dadurch gekennzeichnet, dass** eine oder die überstehende Abströmkante des Deckbandes (2) zur besseren Strömungsführung mit einer Abrundung versehen ist, die stromab oder stromauf der Schaufelhinterkante endet.

5. Strömungsarbeitsmaschine nach einem der Ansprüche 1 oder 2, **dadurch gekennzeichnet, dass** eine oder die überstehende Abströmkante des Deckbandes (2) im Wesentlichen scharfkantig ausgebildet ist.

6. Strömungsarbeitsmaschine nach einem der Ansprüche 1 oder 2, **dadurch gekennzeichnet, dass** eine oder die überstehende Abströmkante des Deckbandes (2) zur besseren Strömungsführung mit einer Nase versehen ist, deren Rundung auf der hauptströmungspfadzugewandten Seite stromab oder stromauf der Schaufelhinterkante endet.

7. Strömungsarbeitsmaschine nach einem der Ansprüche 1 bis 6, **dadurch gekennzeichnet, dass** eine oder die Abströmkante des Deckbandes (2) eine Überlappung (Ux) mit der die Ausnehmung (3) stromab begrenzenden Wandung aufweist, derart, dass die in Hauptströmungsrichtung betrachtet hintere begrenzende Wandung der Ausnehmung (3) nicht in radialer Richtung, sondern zumindest örtlich zur Hauptströmungsrichtung schräg stromab orientiert ist und durch die zur Hauptströmungsrichtung schräge Gestaltung der Rückseite des Deckbandes (2) in diesem Bereich ein gegen die radiale Richtung geneigter und/oder gekrümmter Kanal zwischen dem Deckband (2) und dem umgebenden Bauteil ausgebildet ist.

8. Strömungsarbeitsmaschine nach einem der Ansprüche 1 bis 7, **dadurch gekennzeichnet, dass** die hauptströmungspfadzugewandte Kontur des Deckbandes (2) in wenigstens einem Teilabschnitt zwischen Anström- und Abströmkante des Deckbandes (2) im Wesentlichen geradlinig verläuft.

9. Strömungsarbeitsmaschine nach einem der Ansprüche 1 bis 7, **dadurch gekennzeichnet, dass** die hauptströmungspfadzugewandte Kontur des Deckbandes (2) in wenigstens einem Teilabschnitt zwischen Anström- und Abströmkante des Deckbandes (2) im Wesentlichen konkav verläuft.

10. Strömungsarbeitsmaschine nach einem der Ansprüche 1 bis 7, **dadurch gekennzeichnet, dass** die hauptströmungspfadzugewandte Kontur des Deckbandes (2) in wenigstens einem Teilabschnitt zwischen Anström- und Abströmkante des Deckbandes (2) im Wesentlichen konvex verläuft.

11. Strömungsarbeitsmaschine nach einem der Ansprüche 7 bis 10, **dadurch gekennzeichnet, dass** die überstehende Anströmkante des Deckbandes (2) und die überstehende Abströmkante des Deckbandes (2) mit Überlappung (Ux) ausgeführt sind und die Überlappungen (Ux) so ausgestaltet sind, dass eine im Wesentlichen V-förmige Ausnehmung (3) um das Deckband (2) vorliegt.

12. Strömungsarbeitsmaschine nach einem der Ansprüche 1 bis 11, **dadurch gekennzeichnet, dass** ein vorgesehener Deckbandüberstand (dVK, dHK) und die Form der zugeordneten Kante des Deckbandes (2) periodisch in Umfangsrichtung der Schaufelreihe, welcher das Deckband (2) zugeordnet ist, variiert.

13. Strömungsarbeitsmaschine nach Anspruch 12, **dadurch gekennzeichnet, dass** die Periode (P) der umfangsgerichteten Variation des Deckbandüberstandes und der Deckbandkantenform in einem ganzzahligen Verhältnis zur Schaufelteilung (S) der mit Deckband (2) versehenen Schaufelreihe steht und folgende Gleichung erfüllt ist:

$$n \cdot P = S$$

14. Strömungsarbeitsmaschine nach einem der Ansprüche 1 bis 13, **dadurch gekennzeichnet, dass** der Deckbandüberstand (dVK, dHK), definiert als Abstand zwischen der Referenzlinie A-B und einer parallel dazu verlaufenden Tangente an der Stelle des maximalen Deckbandüberstandes und bezogen auf die Ringkanalweite W an der dem Ort des maximalen Überstandes nächstgelegenen Schaufelkante (Vorderkante (VK) oder Hinterkante (HK)) mehr als 1% beträgt und somit folgenden Gleichungen genügt:

$$dVK / WVK > 0{,}01, \text{ bzw.}$$

$$dHK / WHK > 0{,}01,$$

wobei der Deckbandüberstand im Vorderkantenbereich dVK direkt an der Schaufelvorderkante und der Deckbandüberstand im Hinterkantenbereich dHK direkt an der Schaufelhinterkante definiert ist, wenn sich der Ort des maximalen Deckbandüberstandes innerhalb der Schaufelreihe zwischen Vorderkante und Hinterkante befindet.

15. Strömungsarbeitsmaschine nach einem der Ansprüche 1 bis 14, **dadurch gekennzeichnet, dass** ein freier Abschnitt (XVK) des Deckbandes (2) stromauf der Schaufelvorderkante vorgesehen ist, dessen Länge, bezogen auf die axiale Erstreckung der Schaufelreihe an der Berandung des Hauptströmungspfades (Vorderkante VK zu Hinterkante HK) mindestens 7% beträgt.

16. Strömungsarbeitsmaschine nach einem der Ansprüche 1 bis 14, **dadurch gekennzeichnet, dass** ein freier Abschnitt (XHK) des Deckbandes (2) stromab der Schaufelhinterkante vorgesehen ist, dessen Länge bezogen auf die axiale Erstreckung der Schaufelreihe an der Berandung des Hauptströmungspfades (Vorderkante VK zur Hinterkante HK) mindestens 7% beträgt.

## Claims

1. Fluid-flow work machine having a main flow path in which there is arranged at least one row of blades (1) having a shroud (2) which, in relation to a longitudinal section of the fluid-flow work machine, is at least partially embedded in a recess (3) of a component such that the recess (3) is connected via openings to the main flow path, wherein a rotating relative movement of the component and the blades (1) with respect to one another is realized, and wherein, during operation of the fluid-flow work machine, a leakage flow is established in the recess (3) around the shroud (2) owing to a pressure gradient across the openings,

   - wherein the shroud (2), in relation to a direction of the machine axis (6) of the fluid-flow work machine, is arranged between two reference points (A) and (B) situated on a boundary of the main flow path of the fluid-flow work machine,
   - wherein the reference point (A) is formed by a foot point of a trailing edge of a blade row situated upstream of the shroud (2), which foot point is closest to the shroud, or by a boundary point on the boundary of the main flow path, which faces the shroud, which is situated 25% of the axial extent of the blade row provided with the shroud (2) upstream of a leading edge of the blade row provided with the shroud (2),
   - wherein the reference point (B) is formed by a foot point of a leading edge of the blade row situated downstream of the shroud (2), which foot point is closest to the shroud, or by a boundary point on the boundary of the main flow path, which faces the shroud, which is situated 25% of the axial extent of the blade row provided with the shroud (2) downstream of a trailing edge of the blade row provided with the shroud (2),
   - wherein, at at least one location on the circumference, the shroud (2), in at least one of the regions of the leading edge or trailing edge of the associated blade row, is positioned with a shroud overhang (dVK, dHK) beyond a rectilinear connection of the reference points (A) and (B) in the main flow path such that, owing to said shroud overhang (dVK, dHK), in the region of at least one opening of the recess (3), a curved profile of the effective main flow path delimitation and of the streamlines at the boundary of the main flow path is achieved, whereby the pressure gradient acting at the recess (3), which pressure gradient determines the leakage flow, is reduced,

   **characterized in that**, for better flow guidance, an overhanging flow-on edge of the shroud (2) is provided with a rounding which ends upstream or downstream of the blade leading edge, and **in that**, for stagnation point formation and for better flow guidance, the overhanging flow-on edge of the shroud (2) has an overlap (Ux) with the wall delimiting the recess (3) upstream, such that the front delimiting wall of the recess (3) as viewed in the main flow direction is oriented not in an axial direction but rather, at least locally, obliquely upstream with respect to the main flow direction, and, due to an oblique shape, with respect to the main flow direction, of the rear side of the shroud (2), in this region, a channel which is inclined and/or curved with respect to the radial direction is formed between the shroud (2) and the surrounding component.

2. Fluid-flow work machine according to Claim 1, **char-**

**acterized in that**, for stagnation point formation and for better flow guidance, the overhanging flow-on edge of the shroud (2) is provided with a nose whose rounding ends upstream or downstream of the blade leading edge on the side facing the main flow path.

3. Fluid-flow work machine according to either of Claims 1 and 2, **characterized in that** an or the overhanging flow-off edge of the shroud (2) is of substantially bluntedged form.

4. Fluid-flow work machine according to one of Claims 1 to 3, **characterized in that**, for better flow guidance, an or the overhanging flow-off edge of the shroud (2) is provided with a rounding which ends downstream or upstream of the blade trailing edge.

5. Fluid-flow work machine according to either of Claims 1 and 2, **characterized in that** an or the overhanging flow-off edge of the shroud (2) is of substantially sharpedged form.

6. Fluid-flow work machine according to either of Claims 1 and 2, **characterized in that**, for better flow guidance, an or the overhanging flow-off edge of the shroud (2) is provided with a nose whose rounding ends downstream or upstream of the blade trailing edge on the side facing the main flow path.

7. Fluid-flow work machine according to one of Claims 1 to 6, **characterized in that** an or the flow-off edge of the shroud (2) has an overlap (Ux) with the wall delimiting the recess (3) downstream, such that the rear delimiting wall of the recess (3) as viewed in the main flow direction is oriented not in a radial direction but rather, at least locally, obliquely downstream with respect to the main flow direction, and, due to the oblique shape, with respect to the main flow direction, of the rear side of the shroud (2), in this region, a channel which is inclined and/or curved with respect to the radial direction is formed between the shroud (2) and the surrounding component.

8. Fluid-flow work machine according to one of Claims 1 to 7, **characterized in that** that contour of the shroud (2) facing the main flow path extends substantially rectilinearly in at least one sub-portion between the flow-on and flow-off edges of the shroud (2).

9. Fluid-flow work machine according to one of Claims 1 to 7, **characterized in that** that contour of the shroud (2) facing the main flow path extends substantially concavely in at least one sub-portion between the flow-on and flow-off edges of the shroud (2).

10. Fluid-flow work machine according to one of Claims 1 to 7, **characterized in that** that contour of the shroud (2) facing the main flow path extends substantially convexly in at least one sub-portion between the flow-on and flow-off edges of the shroud (2).

11. Fluid-flow work machine according to one of Claims 7 to 10, **characterized in that** the overhanging flow-on edge of the shroud (2) and the overhanging flow-off edge of the shroud (2) are formed with an overlap (Ux), and the overlaps (Ux) are formed such that a substantially V-shaped recess (3) is present around the shroud (2).

12. Fluid-flow work machine according to one of Claims 1 to 11, **characterized in that** a provided shroud overhang (dVK, dHK) and the shape of the associated edge of the shroud (2) vary in a periodic manner in a circumferential direction of the blade row with which the shroud (2) is associated.

13. Fluid-flow work machine according to Claim 12, **characterized in that** the period (P) of the circumferential variation of the shroud overhang and of the shroud edge shape is in an integer ratio with the blade spacing (S) of the blade row provided with the shroud (2), and the following equation is satisfied:

$$n \cdot P = S$$

14. Fluid-flow work machine according to one of Claims 1 to 13, **characterized in that** the shroud overhang (dVK, dHK), defined as the distance between the reference line A-B and a tangent, extending parallel thereto, at the point of the maximum shroud overhang and in relation to the annular channel width W at the blade edge (leading edge (VK) or trailing edge (HK)) closest to the location of the maximum overhang, is more than 1% and thus satisfies the following equations:

$$dVK/WVK > 0.01,$$

or

$$dHK/WHK > 0.01,$$

where the shroud overhang in the leading edge region, dVK, is defined directly at the blade leading edge, and the shroud overhang in the trailing edge region, dHK, is defined directly at the blade trailing edge, if the location of the maximum shroud overhang is situated within the blade row between the leading edge and the trailing edge.

**15.** Fluid-flow work machine according to one of Claims 1 to 14, **characterized in that** a free portion (XVK) of the shroud (2) is provided upstream of the blade leading edge, the length of which free portion, in relation to the axial extent of the blade row at the boundary of the main flow path (leading edge VK to trailing edge HK), is at least 7%.

**16.** Fluid-flow work machine according to one of Claims 1 to 14, **characterized in that** a free portion (XHK) of the shroud (2) is provided downstream of the blade trailing edge, the length of which free portion, in relation to the axial extent of the blade row at the boundary of the main flow path (leading edge VK to trailing edge HK), is at least 7%.

**Revendications**

**1.** Machine de travail fluidique comprenant un chemin d'écoulement principal dans lequel est disposée au moins une rangée d'aubes (1) avec une virole (2) qui, par rapport à une coupe longitudinale de la machine de travail fluidique, est au moins en partie encastrée dans un évidement (3) d'un composant de telle sorte que l'évidement (3) soit en liaison avec le chemin d'écoulement principal par le biais d'ouvertures, le composant et les aubes (1) effectuant un mouvement de rotation relatif les uns par rapport aux autres et un écoulement de fuite se produisant par le biais des ouvertures pendant le fonctionnement de la machine de travail fluidique dans l'évidement (3) autour de la virole (2) sous l'effet d'un gradient de pression,

- la virole (2), par rapport à une direction de l'axe de machine (6) de la machine de travail fluidique, étant disposée entre deux points de référence (A) et (B) situés sur une bordure du chemin d'écoulement principal de la machine de travail fluidique,
- le point de référence (A) étant formé par un point de base, le plus proche de la virole, d'une arête arrière d'une rangée d'aubes se trouvant en amont de la virole (2) ou par un point de bord au niveau de la bordure du chemin d'écoulement principal qui est tournée vers la virole, lequel se trouve à 25 % de l'étendue axiale de la rangée d'aubes pourvue de la virole (2), en amont d'une arête avant de la rangée d'aubes pourvue de la virole (2),
- le point de référence (B) étant formé par un point de base, le plus proche de la virole, d'une arête avant de la rangée d'aubes se trouvant en aval de la virole (2) ou par un point de bord au niveau de la bordure du chemin d'écoulement principal qui est tournée vers la virole, lequel se trouve à 25 % de l'étendue axiale de la rangée d'aubes pourvue de la virole (2), en aval d'une arête arrière de la rangée d'aubes pourvue de la virole (2),
- la virole (2) se trouvant avec une saillie de virole (dVK, dHK) dans le chemin d'écoulement principal à au moins un endroit de la circonférence dans au moins une des régions de l'arête avant ou de l'arête arrière de la rangée d'aubes associée au-delà d'une liaison rectiligne des points de référence (A) et (B), de manière à obtenir, du fait de cette saillie de virole (dVK, dHK) dans la région d'au moins une ouverture de l'évidement (3), une allure arrondie de la limitation effective du chemin d'écoulement principal ainsi que des lignes d'écoulement au niveau de la bordure du chemin d'écoulement principal, de sorte que le gradient de pression agissant au niveau de l'évidement (3), lequel gradient définit l'écoulement de fuite, soit réduit,

**caractérisée en ce qu'**une arête d'attaque saillante de la virole (2), pour un meilleur guidage de l'écoulement, est pourvue d'un arrondi qui se termine en amont ou en aval de l'arête avant de l'aube, et **que** l'arête d'attaque saillante de la virole (2), pour former un point de stagnation et pour un meilleur guidage de l'écoulement, présente un chevauchement (Ux) avec la paroi limitant en amont l'évidement (3), de telle sorte que la paroi de limitation de l'évidement (3) avant, vue dans la direction de l'écoulement principal, ne soit pas orientée dans la direction axiale mais au moins localement obliquement vers l'amont par rapport à la direction de l'écoulement principal et de telle sorte qu'un canal incliné et/ou courbé vers la direction radiale soit réalisé dans cette région entre la virole (2) et le composant périphérique par une configuration oblique, par rapport à la direction de l'écoulement principal, du côté arrière de la virole (2).

**2.** Machine de travail fluidique selon la revendication 1, **caractérisée en ce que** l'arête d'attaque saillante de la virole (2), pour former un point de stagnation et pour un meilleur guidage de l'écoulement, est pourvue d'un nez dont l'arrondi se termine en amont ou en aval de l'arête avant de l'aube du côté tourné vers le chemin d'écoulement principal.

**3.** Machine de travail fluidique selon l'une quelconque des revendications 1 et 2, **caractérisée en ce qu'**une arête de fuite saillante ou l'arête de fuite saillante de la virole (2) est réalisée essentiellement avec une arête émoussée.

**4.** Machine de travail fluidique selon l'une quelconque des revendications 1 à 3, **caractérisée en ce qu'**une arête de fuite saillante ou l'arête de fuite saillante de la virole (2) est pourvue d'un arrondi pour améliorer le guidage de l'écoulement, lequel se termine en aval ou en amont de l'arête arrière de l'aube.

5. Machine de travail fluidique selon l'une quelconque des revendications 1 ou 2, caractérisée qu'une arête de fuite saillante ou l'arête de fuite saillante de la virole (2) est réalisée essentiellement avec une arête vive.

6. Machine de travail fluidique selon l'une quelconque des revendications 1 et 2, **caractérisée en ce qu'**une arête de fuite saillante ou l'arête de fuite saillante de la virole (2) est pourvue d'un nez pour améliorer le guidage de l'écoulement, dont la partie arrondie se termine en aval ou en amont de l'arête arrière de l'aube.

7. Machine de travail fluidique selon l'une quelconque des revendications 1 à 6, **caractérisée en ce qu'**une arête de fuite ou l'arête de fuite de la virole (2) présente un chevauchement (Ux) avec la paroi limitant en aval l'évidement (3), de telle sorte que la paroi de limitation de l'évidement (3) arrière, vue dans la direction de l'écoulement principal, ne soit pas orientée dans la direction radiale mais au moins localement obliquement vers l'aval par rapport à la direction de l'écoulement principal et de telle sorte qu'un canal incliné et/ou courbé vers la direction radiale soit réalisé dans cette région entre la virole (2) et le composant périphérique par la configuration oblique, par rapport à la direction de l'écoulement principal, du côté arrière de la virole (2).

8. Machine de travail fluidique selon l'une quelconque des revendications 1 à 7, **caractérisée en ce que** le contour de la virole (2), tourné vers le chemin d'écoulement principal, s'étend essentiellement en ligne droite dans au moins une portion partielle entre l'arête d'attaque et l'arête de fuite de la virole (2).

9. Machine de travail fluidique selon l'une quelconque des revendications 1 à 7, **caractérisée en ce que** le contour de la virole (2), tourné vers le chemin d'écoulement principal, s'étend essentiellement sous forme concave dans au moins une portion partielle entre l'arête d'attaque et l'arête de fuite de la virole (2).

10. Machine de travail fluidique selon l'une quelconque des revendications 1 à 7, **caractérisée en ce que** le contour de la virole (2), tourné vers le chemin d'écoulement principal, s'étend essentiellement sous forme convexe dans au moins une portion partielle entre l'arête d'attaque et l'arête de fuite de la virole (2).

11. Machine de travail fluidique selon l'une quelconque des revendications 7 à 10, **caractérisée en ce que** l'arête d'attaque saillante de la virole (2) et l'arête de fuite saillante de la virole (2) sont réalisées avec un chevauchement (Ux) et les chevauchements (Ux) sont configurés de telle sorte qu'il existe un évidement (3) essentiellement en forme de V autour de la virole (2).

12. Machine de travail fluidique selon l'une quelconque des revendications 1 à 11, **caractérisée en ce qu'**une saillie de virole prévue (dVK, dHK) et la forme de l'arête associée de la virole (2) varient périodiquement dans la direction périphérique de la rangée d'aubes à laquelle est associée la virole (2).

13. Machine de travail fluidique selon la revendication 12, **caractérisée en ce que** la période (P) de la variation dans le sens périphérique de la saillie de la virole et de la forme de l'arête de la virole se situe dans un rapport entier par rapport à la division des aubes (S) de la rangée d'aubes pourvue de la virole (2) et l'équation suivante est satisfaite :

$$n*P=S$$

14. Machine de travail fluidique selon l'une quelconque des revendications 1 à 13, **caractérisée en ce que** la saillie de virole (dVK, dHK), définie comme la distance entre la ligne de référence A-B et une tangente s'étendant parallèlement à celle-ci au niveau de l'endroit de la saillie maximale de virole et par rapport à la largeur W du canal annulaire au niveau de l'arête d'aube la plus proche de la saillie maximale (arête avant (VK) ou arête arrière (HK)), est supérieure à 1 % et satisfait ainsi aux équations suivantes :

$$dVK / WVK > 0{,}01,$$

ou

$$dHK / WHK > 0{,}01,$$

la saillie de virole dans la région de l'arête avant dVK étant définie directement au niveau de l'arête avant de l'aube et la saillie de virole dans la région de l'arête arrière dHK étant définie directement au niveau de l'arête arrière de l'aube si l'endroit de la saillie maximale de virole est situé à l'intérieur de la rangée d'aubes entre l'arête avant et l'arête arrière.

15. Machine de travail fluidique selon l'une quelconque des revendications 1 à 14, **caractérisée en ce qu'**il est prévu une portion libre (XVK) de la virole (2) en amont de l'arête avant de l'aube, dont la longueur, par rapport à l'étendue axiale de la rangée d'aubes au niveau de la bordure du chemin d'écoulement principal (arête avant VK par rapport à l'arête arrière HK), vaut au moins 7 %.

16. Machine de travail fluidique selon l'une quelconque des revendications 1 à 14, **caractérisée en ce qu'**il est prévu une portion libre (XHK) de la virole (2) en aval de l'arête arrière de l'aube, dont la longueur, par rapport à l'étendue axiale de la rangée d'aubes au niveau de la bordure du chemin d'écoulement principal (arête avant VK par rapport à l'arête arrière HK), vaut au moins 7 %.

**Fig. 1a**
(Stand der Technik)

EP 2 003 292 B1

Fig. 1b
(Stand der Technik)

EP 2 003 292 B1

Fig. 1c
(Stand der Technik)

Fig. 1d
(Stand der Technik)

Fig. 1e
(Stand der Technik)

EP 2 003 292 B1

Fig. 2

Fig. 3a

EP 2 003 292 B1

Fig. 3b

Fig. 3c

EP 2 003 292 B1

Fig. 4a

Fig. 4b

EP 2 003 292 B1

Fig. 4c

Fig. 4d

EP 2 003 292 B1

Fig. 4e

EP 2 003 292 B1

Fig. 5a

EP 2 003 292 B1

Fig. 5b

EP 2 003 292 B1

Fig. 5c

EP 2 003 292 B1

Fig. 5d

Fig. 6a

Fig. 6b

EP 2 003 292 B1

Fig. 7

Fig. 8

EP 2 003 292 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 3640638 A
- EP 0799973 A1
- GB 1149616 A